# FASCICULE DE BREVET EUROPEEN

(11) **EP 3 489 487 B1**
(45) Date de publication et mention de la délivrance du brevet: **17.02.2021**
(21) Numéro de dépôt: 18207089.6
(22) Date de dépôt: 19.11.2018
(51) Int. Cl.: F02C 7/045

(54) **PANNEAU D'ATTÉNUATION ACOUSTIQUE POUR AÉRONEF**
SCHALLDÄMMPLATTE FÜR LUFTFAHRZEUG
ACOUSTIC ATTENUATION PANEL FOR AIRCRAFT

(30) Priorité: 28.11.2017 FR 1761249
(43) Date de publication de la demande: 29.05.2019
(73) Titulaire: Airbus Operations SAS, 31060 Toulouse (FR)
(72) Inventeur: BROCHARD, Wolfgang, 31390 Carbonne (FR); RAVISE, Florian, 44800 Saint-Herblain (FR)
(74) Mandataire: Gevers & Orès

(56) Documents cités:
- FR-A1- 3 026 122
- US-A- 5 445 861
- US-A1- 2013 186 707
- US-A1- 2015 041 247

## Description

### DOMAINE TECHNIQUE

La présente invention concerne un panneau d'atténuation acoustique pour aéronef, et en particulier pour un capot de nacelle de réacteur d'un aéronef.

### ETAT DE LA TECHNIQUE

On sait que sur un aéronef, par exemple sur un avion de transport, des bruits importants sont souvent générés, notamment par les réacteurs de l'aéronef. Il est connu, pour réduire l'effet sonore produit par les réacteurs de l'aéronef de prévoir, en particulier au niveau des nacelles des réacteurs, des parois pourvues de panneaux présentant une bonne absorption acoustique.

De façon usuelle, un panneau d'atténuation acoustique, dit panneau acoustique ci-après, comprend généralement une plaque réalisée en un matériau et/ou une structure présentant de bonnes propriétés d'absorption acoustique, notamment pour les fréquences des bruits les plus gênants. Cette atténuation est réalisée généralement au travers d'un phénomène physique dit "de quart d'onde" ou de 'Helmholtz". Cette structure utilisée pour l'absorption acoustique peut donc être en matériau alvéolaire mais aussi à base de mousse ou de matériau fibreux.

Cette plaque présente souvent, pour ce faire, une structure alvéolaire en nid d'abeilles pour la plupart des panneaux, et est munie sur ses deux faces, respectivement, d'une peau dite résistive (« resistive skin » en anglais) souvent perforée et d'une peau arrière non perforée (« backing skin » en terme anglais). Le panneau acoustique est agencé pour que la peau résistive soit située à proximité de la source de bruit, notamment en amont et/ou en aval de la soufflante (« fan » en anglais) dans le cas d'un réacteur d'aéronef, pour réaliser une absorption efficace du bruit généré en amont et aval de la soufflante.

La taille des alvéoles (section et hauteur) de la structure en nid d'abeilles est globalement adaptée à la fréquence du bruit à absorber. Or, si le bruit varie, en particulier si la fréquence du bruit à absorber baisse (de 300 Hz à 700Hz environ), en raison par exemple d'une réduction de la vitesse de rotation de la soufflante en lien avec une augmentation de son diamètre, il est nécessaire d'augmenter la hauteur des alvéoles, ce qui génère une augmentation de l'épaisseur de la structure alvéolaire.

La solution usuelle présente ainsi le désavantage d'avoir à augmenter l'épaisseur de la structure, notamment le matériau alvéolaire du panneau acoustique, pour l'adapter à des bruits différents et principalement de fréquence plus basse, générés par exemple par une soufflante de plus grand diamètre et de vitesse de rotation réduite. Cette augmentation de la taille de la structure en nid d'abeilles entraîne des inconvénients en termes de masse et de taille (surface), ce qui pénalise la traînée du panneau acoustique.

### EXPOSÉ DE L'INVENTION

La présente invention a pour objet de remédier à ces inconvénients (masse et épaisseur), Pour ce faire, elle concerne un panneau acoustique pour aéronef, et en particulier pour une nacelle d'un réacteur de l'aéronef, ledit panneau acoustique comprenant une plaque réalisée en un matériau absorbant acoustique (ou matériau d'absorption acoustique) ainsi qu'une peau dite résistive et une peau dite arrière agencées, respectivement, de part et d'autre de cette plaque.

Selon l'invention, ladite plaque est pourvue d'une pluralité de logements transversaux pratiqués dans le matériau absorbant acoustique de ladite plaque, et ledit panneau acoustique comporte une pluralité d'éléments acoustiques de forme allongée, aptes à réaliser une absorption acoustique, chacun desdits éléments acoustiques présentant une ouverture à au moins une extrémité longitudinale et étant fixé avec un contact périphérique dans l'un desdits logements transversaux pratiqués dans ladite plaque en matériau d'absorption acoustique avec son ouverture en regard de ladite peau résistive.

Ainsi, grâce à l'invention, on intègre des éléments acoustiques dans la plaque en matériau absorbant acoustique du panneau acoustique, qui sont aptes à absorber des bruits présentant des fréquences différentes, par exemple des fréquences plus basses, que celles des bruits absorbés par la plaque. La combinaison de la plaque (acoustique) et des éléments acoustiques permet ainsi de combiner les propriétés d'absorption acoustique des deux types d'absorption acoustique et donc de prévoir des éléments acoustiques adaptés à des bruits qui ne sont pas absorbés par la seule plaque.

De plus, comme les éléments acoustiques sont intégrés dans la plaque, cette intégration, en plus d'augmenter les capacités et propriétés d'absorption, n'a pas ou très peu d'incidence en terme d'encombrement et tout plus une faible incidence en terme de masse pour le panneau acoustique.

Lesdits éléments acoustiques peuvent être réalisés de différentes manières. Dans un premier mode réalisation, au moins certains desdits éléments acoustiques présentent une forme conique. En outre, dans un second mode de réalisation, au moins certains desdits éléments acoustiques présentent une forme cylindrique, par exemple un cylindre de révolution ou bien un prisme.

De façon avantageuse, les éléments acoustiques sont collés, soudés ou brasés dans les logements de la plaque en matériau d'absorption acoustique. Tout autre moyen de fixation usuel peut également être envisagé.

Par ailleurs, dans un premier mode réalisation, au moins certains desdits éléments acoustiques sont pourvus d'un fond fermé, à une extrémité longitudinale opposée à celle pourvue de l'ouverture.

En outre, dans un second mode de réalisation, au moins certains desdits éléments acoustiques sont pourvus d'une ouverture dite auxiliaire, à une extrémité longitudinale opposée à celle pourvue de ladite ouverture, ladite ouverture auxiliaire étant située à distance de ladite peau arrière.

Par ailleurs, dans un mode de réalisation particulier, au moins certains desdits éléments acoustiques sont agencés dans la plaque selon l'une des dispositions suivantes : aléatoire, en carré, en quinconce.

Par ailleurs, de façon avantageuse, au moins certains desdits éléments acoustiques sont pourvus d'une collerette entourant ladite ouverture, chacune desdites collerettes étant fixée à la peau résistive et/ou à la plaque en matériau d'absorption acoustique.

En outre, dans un premier mode de réalisation particulier, le panneau acoustique comporte des éléments acoustiques d'un seul et même type. Par ailleurs, dans un second mode de réalisation particulier, le panneau acoustique comporte des éléments acoustiques de plusieurs types différents. De préférence, chaque type d'élément acoustique est configuré pour permettre une absorption acoustique privilégiée dans au moins une gamme de fréquences acoustiques donnée.

En outre, avantageusement, les éléments acoustiques d'un même type, parmi lesdits types différents, peuvent être regroupés dans au moins une zone donnée de la plaque.

Par ailleurs, de façon avantageuse :
- au moins la peau résistive est incurvée (simple ou double courbure, convexe et/ou concave), et les éléments acoustiques sont agencés de sorte que leur direction longitudinale soit sensiblement radiale, localement, à ladite peau résistive incurvée ;
- pour au moins certains desdits éléments acoustiques, l'élément acoustique possède une géométrie spécifique afin de s'intégrer dans le logement dans lequel il est agencé de manière à créer un espace libre (jeu mécanique), ledit l'espace libre étant rempli par un matériau dit de remplissage ;
- au moins certains desdits éléments acoustiques présentent une structure double à deux pièces similaires, par exemple deux cônes ou deux cylindres, dont l'une est intégrée dans l'autre ;
- la peau résistive présente une perméabilité sonore, au moins pour des sons devant être atténués par le panneau acoustique, plus importante que la peau arrière ;
- le matériau absorbant acoustique de la plaque est réalisé selon l'une des manières suivantes : avec une structure alvéolaire, de préférence une structure en nids d'abeille, en mousse en matière fibreuse ou en matériau fritté.

La présente invention concerne également un procédé de fabrication d'un panneau acoustique tel que celui décrit ci-dessus.

Selon l'invention, ledit procédé de fabrication comporte une pluralité d'étapes successives consistant au moins, respectivement :
- à former la plaque en matériau absorbant acoustique ;
- à pratiquer les logements transversaux dans le matériau absorbant acoustique de ladite plaque (débouchant ou non) ;
- à placer et fixer les éléments acoustiques dans lesdits logements ; et
- à agencer et fixer la peau résistive et la peau arrière de part et d'autre de la plaque.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique, en coupe et en perspective, d'un premier mode de réalisation particulier d'un panneau acoustique ;
- la figure 2 est vue éclatée du panneau acoustique de la figure 1 ;
- la figure 3 est une vue schématique en coupe d'un élément acoustique monté dans le panneau acoustique de la figure 1 ;
- la figure 4 est une vue schématique, en perspective, d'un second mode de réalisation particulier d'un panneau acoustique ;
- la figure 5 est vue éclatée du panneau acoustique de la figure 4 ;
- la figure 6 est une vue, en coupe et en perspective, d'un premier mode de réalisation particulier d'un élément acoustique pourvu d'une collerette et d'un fond ;
- les figures 7 et 8 sont des vues en coupe, respectivement en perspective et en vue latérale, d'un mode de réalisation particulier d'un élément acoustique pourvu d'une collerette et sans fond ;
- les figures 9 et 10 Illustrent schématiquement deux modes de répartition différents des éléments acoustiques dans la plaque ; et
- la figure 11 illustre schématiquement les étapes principales d'un procédé de fabrication d'un panneau acoustique en mode préférentiel.

### DESCRIPTION DÉTAILLÉE

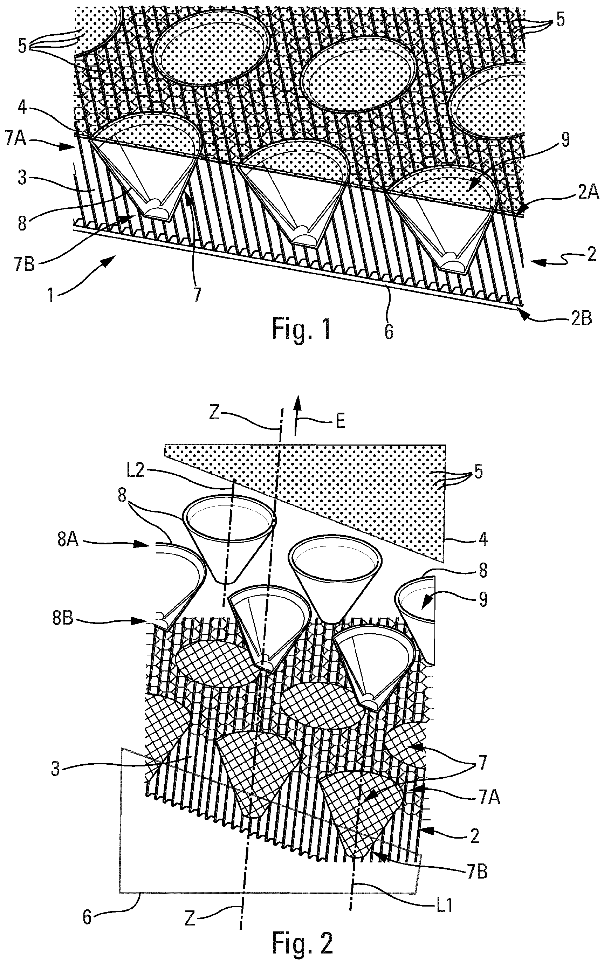

Le panneau acoustique 1 (ou panneau d'atténuation acoustique) représenté schématiquement sur la figure 1 et permettant d'illustrer l'invention, est destiné à permettre de réduire (ou atténuer) du bruit en l'absorbant, sur un aéronef (non représenté), en particulier sur un avion de transport. Dans un mode de réalisation préféré, ce panneau acoustique 1 est destiné à permettre de réduire le bruit sur une nacelle (non représentée) d'un réacteur de l'aéronef.

De façon usuelle, ce panneau acoustique 1 comprend, comme représenté sur la figure 1, ainsi que sur la figure 2 en vue éclatée :
- une plaque 2 réalisée en un matériau 3 absorbant acoustique, c'est-à-dire qui est apte à absorber du bruit pour l'atténuer ;
- une peau 4 dite résistive qui est perméable au son, c'est-à-dire qui est par exemple pourvue d'une pluralité de perforations (ou trous, évidements, ajournements) 5, traversant ladite peau résistive 4 de part en part, lesdites perforations 5 étant représentées par des points sur les figures 1 et 2 notamment ; et
- une peau 6 dite arrière (« backing skin » en anglais), pour fermer le panneau acoustique 1. Cette peau arrière 6 est non perforée et possède une certaine imperméabilité aux sons.

Plus précisément, la peau résistive 4 présente une perméabilité sonore, au moins à des sons devant être atténués par le panneau acoustique 1, plus importante que la peau arrière 6.

Ces peaux résistive 4 et arrière 6 sont agencées et fixées, respectivement, de part et d'autre de la plaque 2, à savoir sur une face 2A (avant) de la plaque 2 pour la peau résistive 4 et sur une face 2B (arrière) de la plaque 2 pour la peau arrière 6 (figure 1).

Généralement, le panneau acoustique 1 est disposé pour que la peau résistive 4 soit positionnée à proximité et de préférence proche (ou en regard) de la source de bruit à atténuer. La peau résistive 4 est agencée plus près de la source de bruit que la peau arrière 6. Le bruit pénètre par les perforations 5, à travers la peau résistive 4, à l'intérieur de la plaque 2 où il est atténué. La peau résistive 4 est réalisée pour présenter une résistance mécanique suffisante en fonction de l'application envisagée, notamment pour supporter la pression d'un flux d'air, les accélérations des facteurs de charges dans le cas d'un réacteur d'aéronef.

Si la couche résistive 4 est aérodynamique, c'est-à-dire si elle est en contact avec le flux d'air, la surface de la peau résistive est dans le lit de l'écoulement.

La peau résistive 4 peut être réalisée de différentes manières. En particulier, elle peut être réalisée sous forme :
- d'une peau perforée ou micro-perforées avec des trous de différentes formes (circulaire ou oblong) ;
- d'un grillage (« wiremesh ») métallique ou polymère tissé très finement afin d'être perméable au son, mais de limiter les interactions aérodynamiques et de réduire la trainée ;
- d'un ensemble plus ou moins complexe composé de grillage et de renforts à base de matériaux composites ou métalliques.

La peau arrière 6 peut également être aérodynamique (en contact avec le flux aérodynamique) selon les configurations et l'installation du panneau acoustique sur l'aéronef.

Sur la figure 2, on a représenté un axe Z orthogonal à la plaque 2 (sensiblement plane dans l'exemple de cette figure 2). De plus, une flèche E indique un sens définissant un sens dit avant (dirigé selon l'axe Z et la source de bruit à traiter) par rapport à la plaque 2. Le sens opposé à celui de la flèche E définit un sens dit arrière par rapport à la plaque 2. Dans la suite de la description, les adjectifs arrière et avant sont définis par rapport au sens de la flèche E.

Selon l'invention, la plaque 2 du panneau acoustique 1 est pourvue d'une pluralité de logements 7 transversaux qui sont pratiqués dans le matériau 3 absorbant acoustique de ladite plaque 2.

Dans le cadre de la présente invention, les logements 7 présentent un axe longitudinal L1 (figure 2). Cet axe L1 est transversal à la plaque 2, c'est-à-dire qu'il est incliné par rapport au plan de la plaque 2. De préférence, bien que non exclusivement, l'axe L1 est parallèle à l'axe Z, c'est-à-dire qu'il est au moins localement orthogonal à la plaque 2.

De plus, ledit panneau acoustique 1 comporte une pluralité d'éléments acoustiques 8 de forme allongée (d'axe longitudinal L2), aptes à réaliser une absorption acoustique. Chacun desdits éléments acoustiques 8 (par exemple sous forme de tronc de cône) est pourvu d'une ouverture 9 à une extrémité longitudinale 8A (avant), par laquelle le bruit pénètre dans l'élément acoustique 8 pour y être atténué, et chacun desdits éléments acoustiques 8 est agencé dans l'un desdits logements transversaux 7 pratiqués, notamment usinés, dans la plaque 2, avec son ouverture 9 en regard de ladite peau résistive 4.

Ainsi, des éléments acoustiques 8 sont intégrés dans la plaque 2 en matériau 3 absorbant acoustique du panneau acoustique 1, ce qui permet d'absorber des bruits présentant des fréquences différentes, et en particulier des fréquences plus basses, que celles du ou des bruits absorbés par le matériau 3 de la plaque 2. La combinaison de la plaque acoustique 2 et des éléments acoustiques 8 permet de combiner les propriétés et caractéristiques des deux types d'absorption acoustique, et ainsi d'augmenter la gamme de fréquences de bruits susceptibles d'être atténuées par le panneau acoustique 1.

Les extrémités longitudinales (selon l'axe longitudinal L1) d'un logement 7, avant et arrière, sont désignées respectivement par les références 7A et 7B, et les extrémités longitudinales (selon l'axe longitudinal L2) d'un élément acoustique 8, avant et arrière, désignées respectivement par les références 8A et 8B, comme montré par exemple sur la figure 2.

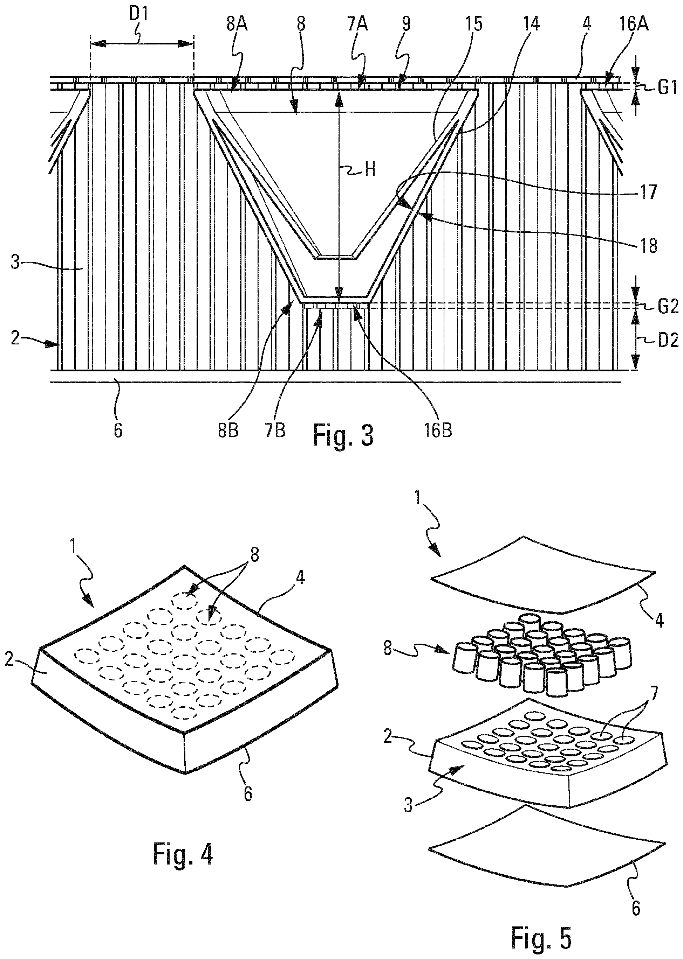

Chaque logement 7 et l'élément acoustique 8 destiné à être placé dans ce logement 7 présentent la même forme, par exemple une forme tronconique comme dans l'exemple des figures 1 et 2 ou une forme cylindrique comme dans l'exemple de la figure 5, avec toutefois une taille du logement 7 adaptée pour permettre l'agencement de l'élément acoustique 8 avec un contact périphérique (externe) de l'élément acoustique 8 dans le logement 7. Par contact périphérique, on entend que la face externe 18 de l'élément acoustique 8 soit en contact, au moins une partie et de préférence entièrement, avec la face interne 17 du logement 7, comme montré notamment sur la figure. Un tel agencement permet également d'avoir un encombrement réduit.

Les éléments acoustiques 8 sont fixés dans les logements 7 de la plaque 2, de préférence au niveau de toute leur périphérie externe. Pour ce faire, les éléments acoustiques 8 sont collés, soudés ou brasés dans les logements 7 en fonction des matériaux utilisés, ou bien ils sont fixés par toute autre méthode usuelle de fixation adaptée aux matériaux de l'élément acoustique 8 et de la plaque 2 et au procédé de fixation utilisé.

Dans le cadre de la présente invention, les éléments acoustiques 8 peuvent être réalisés de différentes manières.

Dans un premier mode de réalisation, représenté sur les figures 1 à 3, les éléments acoustiques 8 présentent une forme conique.

Dans une réalisation particulière de ce premier mode de réalisation, la forme tronconique d'un élément acoustique 8 comprend, comme représenté en détail sur la figure 3, un double cône pourvu d'un cône externe 14, dans lequel est agencé un cône interne 15. Ces cônes 14 et 15 sont fixés ensemble à l'extrémité 8A (externe) de l'élément acoustique 8. Dans cette réalisation particulière, l'élément acoustique 8 présente donc une structure double à deux pièces similaires, à savoir deux cônes 14 et 15, dont l'un est intégré dans l'autre.

Dans l'exemple de la figure 3, l'élément acoustique 8 présente une longueur H selon son axe longitudinal L2 (montré sur la figure 2). De plus, deux éléments acoustiques 8 voisins sont espacés l'un de l'autre au niveau de l'extrémité 8A d'une distance D1. Cette distance D1 est choisie, notamment, en fonction du nombre d'éléments acoustiques 8 nécessaires et de la résistance structurelle de la plaque 2.

On peut également prévoir que la plaque 2 présente une épaisseur D2 entre la peau arrière 6 et l'extrémité 7B (arrière) du logement 7. Cette distance D2 est choisie, notamment, en fonction de la résistance structurelle de la plaque 2, et de la taille des différents éléments acoustiques 8 prévus et de l'épaisseur de la plaque 2 nécessaire pour l'absorption.

En outre, un espace 16A de longueur G1 peut être prévu entre l'extrémité 7A (avant) du logement 7 et la peau résistive 4, pour limiter ou éviter un contact entre l'extrémité 8A de l'élément acoustique 8 et la peau résistive 4.

De plus, un espace 16B de longueur G2 peut exister dans l'extrémité 7B (ou fond) du logement 7 par rapport à l'extrémité 8B de l'élément acoustique 8 quand ce dernier est agencé dans le logement 7. Cette longueur G2 dépend de la tolérance prévue et du choix d'autoriser ou non un contact entre l'extrémité 8B de l'élément acoustique 8 et le matériau 3 de la plaque 2. Cet espace libre peut être rempli par un matériau de remplissage, par exemple une colle ou une mousse intumescente.

A titre d'illustration (non limitative) :
- H peut être compris entre 20 et 45 millimètres ;
- D1 peut être compris entre 0 et 20 millimètres ;
- D2 peut être compris entre 0 et 20 millimètres ;
- G1 peut être compris entre 0 et 2 millimètres ; et
- G2 peut être compris entre 0 et 2 millimètres.

En outre, dans un second mode de réalisation des éléments acoustiques, au moins certains desdits éléments acoustiques 8 présentent une forme cylindrique, par exemple un cylindre de révolution ou un prisme.

Un cylindre (ou forme cylindrique) est un solide délimité par une surface cylindrique et par deux plans parallèles. Une surface cylindrique est définie par une droite génératrice, de direction constante, se déplaçant le long d'une courbe fermée. Lorsque les plans sont perpendiculaires à la droite génératrice, le cylindre est un cylindre droit. Lorsque la courbe fermée est circulaire, le cylindre est circulaire. Un cylindre droit et circulaire est un cylindre de révolution. Lorsque la courbe fermée est un polygone, on obtient un prisme.

A titre d'illustration de ce second mode de réalisation, dans l'exemple des figures 4 et 5, les éléments acoustiques 8 sont réalisés, chacun, sous forme d'un cylindre de révolution. Cette forme permet une réalisation simplifiée des éléments acoustiques 8 et des logements 7.

Dans une réalisation particulière (non représentée) de ce second mode de réalisation, l'élément acoustique 8 peut également présenter une structure double à deux pièces similaires, à savoir deux cylindres, dont l'un est intégré dans l'autre.

On dispose d'un élément acoustique 8 qui réalise de façon indépendante l'absorption.

Par ailleurs, dans un mode de réalisation particulier, au moins la peau résistive 4 est incurvée dans les deux directions du plan formé par la peau résistive. Dans ce cas, de préférence, tout le panneau acoustique 1 est incurvé, comme représenté à titre d'exemple sur la figure 4. Dans un mode de réalisation préféré, les éléments acoustiques 8 sont alors agencés de sorte que leur direction longitudinale soit sensiblement perpendiculaire à la surface radiale localement, à la peau résistive 4 incurvée. Dans une variante de réalisation (non représentée), la peau résistive peut être incurvée dans une seule direction.

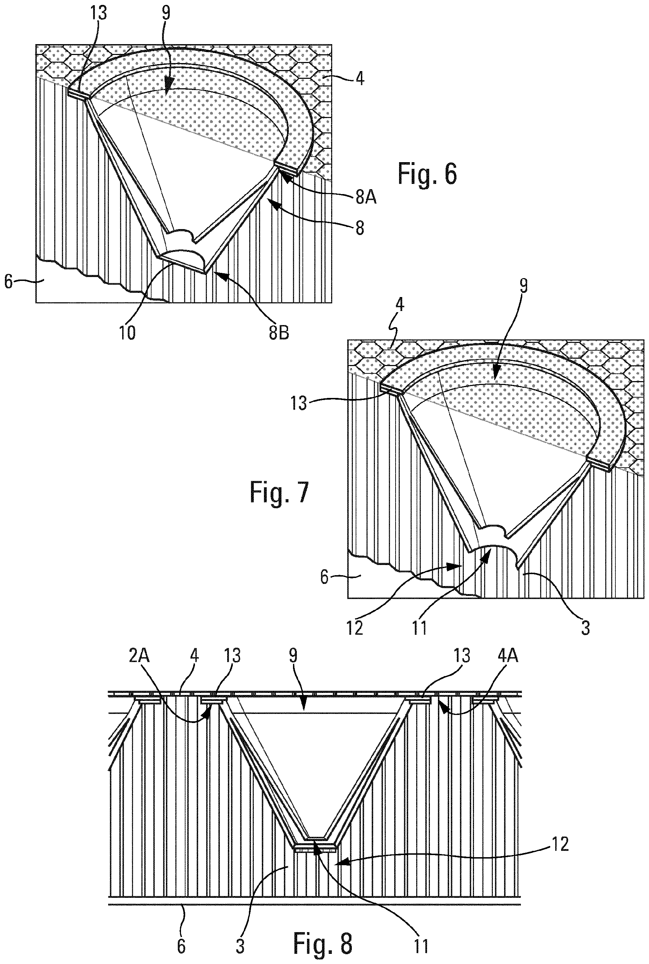

Par ailleurs, dans un premier mode de réalisation, au moins certains des éléments acoustiques 8 du panneau acoustique 1 sont pourvus d'un fond 10 fermé, à l'extrémité longitudinale 8B (arrière) opposée à celle 8A (avant) pourvue de l'ouverture 9, comme représenté sur la figure 6. Ce premier mode de réalisation permet d'obtenir un espace fermé à l'intérieur de l'élément acoustique 8 (avec, comme seule ouverture, l'ouverture 9), ce qui favorise l'absorption acoustique.

En outre, dans un second mode de réalisation, au moins certains des éléments acoustiques 8 sont pourvus d'une ouverture 11 dite auxiliaire, à l'extrémité longitudinale 8B (arrière) opposée à celle 8A (avant) pourvue de l'ouverture 9, comme représenté sur les figures 7 et 8.

Cette ouverture auxiliaire 11 est située, de préférence, à distance de la peau arrière 6. On prévoit ainsi une zone 12 de matériau 3 de la plaque 2 entre cette ouverture 11 et la peau arrière 6, permettant notamment de générer une fermeture de l'espace interne de l'élément acoustique 8 au niveau de l'ouverture auxiliaire 11. La zone 12 peut être de longueur D2. Grâce à ce second mode de réalisation, on obtient une réduction de masse de l'élément acoustique 8 et sa fabrication est simplifiée. Le fonctionnement de l'élément acoustique 8 est couplé à la zone 12. Si la distance D2 est nulle, la peau arrière 6 peut servir de fond.

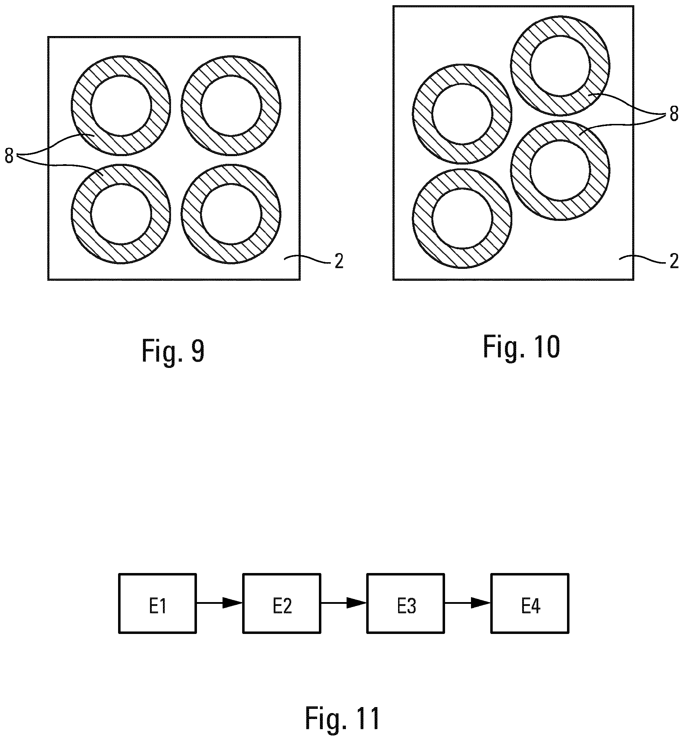

Dans le cadre de la présente invention, les éléments acoustiques 8 peuvent être agencés dans la plaque 2 selon l'une ou plusieurs des dispositions suivantes : une disposition aléatoire, ou une disposition calibrée telle que, par exemple, une disposition en carré (figure 9) ou une disposition en quinconce (figure 10).

Bien entendu, les éléments acoustiques peuvent être regroupés en une pluralité de groupes, et chaque groupe peut avoir une disposition particulière de ses éléments acoustiques. Les dispositions des différents groupes peuvent être identiques, au moins pour certains d'entre eux, ou être différents, au moins pour certains d'entre eux.

Par ailleurs, dans un mode de réalisation particulier, au moins certains des éléments acoustiques 8 ou tous les éléments acoustiques 8 sont pourvus d'une collerette 13, comme représenté sur les figures 6 à 8. La collerette 13 d'un élément acoustique 8 est une plaque annulaire séparée, qui est rendue solidaire de l'élément acoustique 8 à l'extrémité 8A (car l'élément acoustique est de révolution). La collerette 13 entoure radialement à l'extérieur l'ouverture 9 de l'élément acoustique 8. De plus, chacune des collerettes 13 est fixée à la face arrière 4A (figure 8) de la peau résistive 4 et/ou à la face avant 2A de la plaque 2.

La collerette 13 permet d'améliorer la fixation de l'élément acoustique 8 et d'augmenter la résistance mécanique.

La collerette 13 est collée, soudée ou brasée sur la peau résistive 4 et/ou sur la plaque 2.

Par ailleurs, dans un mode de réalisation particulier, le panneau acoustique 1 comporte des éléments acoustiques 8 d'une pluralité (deux, trois, quatre, ...) de types différents.

De préférence, chaque type d'élément acoustique est configuré pour permettre une absorption acoustique privilégiée dans au moins une gamme de fréquences acoustiques donnée.

On entend par « absorption acoustique privilégiée » dans une gamme de fréquences acoustiques considérée, le fait qu'un élément acoustique possède des propriétés acoustiques lui permettant d'absorber efficacement des bruits présentant des fréquences faisant partie de ladite gamme de fréquences acoustiques considérée, et ceci qu'il soit en mesure ou non d'absorber des bruits ayant des fréquences hors de ladite gamme.

Dans une première variante de réalisation, les éléments acoustiques de types différents peuvent être mélangés, en étant par exemple répartis relativement uniformément dans la plaque. Ainsi, toutes les parties de la plaque sont configurées pour absorber la même pluralité de gammes de fréquences acoustiques.

En outre, dans une seconde variante de réalisation, les éléments acoustiques d'un même type, parmi lesdits différents types, peuvent être regroupés, à chaque fois, dans au moins une zone donnée de la plaque 2.

On peut ainsi prévoir différentes zones du panneau acoustique 1 qui sont appropriées, chacune, à l'absorption de bruits de fréquences particulières. Ce mode de réalisation est notamment avantageux en présence de sources de bruits différentes, présentant des fréquences différentes et localisées à des endroits différents.

Le panneau acoustique 1 est alors configuré et disposé pour que chacune de ces zones soit située le plus près possible de la source de bruit qu'elle doit atténuer.

Dans le cadre de la présente invention, la plaque 2 peut être réalisée de différentes manières.

Plus précisément, le matériau absorbant acoustique 3 de la plaque 2 peut être réalisé selon l'une des manières suivantes :
- avec une structure alvéolaire, de préférence une structure en nids d'abeille, ou une structure alvéolaire présentant des alvéoles d'autres formes ; ou
- en une mousse présentant des propriétés acoustiques appropriées ; ou
- en un matériau fibreux présentant des propriétés acoustiques appropriées.

Dans le cadre de la présente invention, la plaque 2 et les éléments acoustiques 8 peuvent être réalisés dans une même matière ou dans des matières différentes. La matière de la plaque 2 et/ou des éléments acoustiques 8 peut être, par exemple, un matériau polymère renforcé de fibres de carbone de type CFRP (pour « Carbon Fiber Reinforced Polymer » en anglais), de fibre d'aramide, de fibre de verre ou du métal tel que l'aluminium ou le titane.

Le panneau acoustique 1, tel que décrit ci-dessus, présente de nombreux avantages. Il permet notamment :
- d'optimiser l'absorption acoustique ;
- de traiter ou d'absorber différentes gammes de fréquences acoustiques ;
- de combiner des éléments présentant différentes propriétés d'absorption acoustiques ;
- et ceci sans augmentation de masse et d'encombrement (et le cas échéant de traînée), ou tout au plus une augmentation de masse et éventuellement d'encombrement (et de trainée) réduite.

En outre :
- les éléments acoustiques 8 fixés dans la plaque 2 participent à la tenue structurale du panneau acoustique 1 en supportant un certain niveau d'efforts structuraux ; et
- le panneau acoustique 1 est apte et défini pour supporter des efforts mécaniques et aérodynamiques.

On décrit ci-après un procédé de fabrication d'un panneau acoustique 1 tel que celui décrit ci-dessus.

Ce procédé de fabrication, privilégié mais non limitatif, comporte une pluralité d'étapes successives comprenant au moins, les étapes suivantes, comme illustré sur la figure 11 (en lien avec la figure 1) :
- une étape E1 consistant à former la plaque 2 en matériau 3 absorbant acoustique ;
- une étape E2 consistant à pratiquer les logements 7 transversaux dans le matériau 3 absorbant acoustique de ladite plaque 2. Les logements 7 peuvent être pratiqués par usinage ou estampage notamment ;
- une étape E3 consistant à placer et fixer les éléments acoustiques 8 dans lesdits logements 7, ces éléments acoustiques 8 ayant été fabriqués à part dans une étape auxiliaire. Les éléments acoustiques 8 peuvent être fixés par collage ou brasage dans les logements 7, ou par toute autre méthode usuelle de fixation qui est notamment adaptée aux matériaux de l'élément acoustique 8 et de la plaque 2. En cas de collage, on peut utiliser un film de colle ou bien une colle liquide ou visqueuse ; et
- une étape E4 consistant à agencer et fixer la peau résistive 4 et la peau arrière 6 de part et d'autre de la plaque 2 pourvue des éléments acoustiques 8.

## Revendications

1. Panneau acoustique pour aéronef, ledit panneau acoustique (1) comprenant une plaque (2) réalisée en un matériau (3) absorbant acoustique ainsi qu'une peau dite résistive (4) et une peau dite arrière (6) agencées, respectivement, de part et d'autre de cette plaque (2),
ladite plaque (2) étant est pourvue d'une pluralité de logements (7) transversaux pratiqués dans le matériau (3) absorbant acoustique de ladite plaque (2), et ledit panneau acoustique (1) comportant une pluralité d'éléments acoustiques (8) de forme allongée, aptes à réaliser une absorption acoustique, chacun desdits éléments acoustiques (8) présentant une ouverture (9) à au moins une extrémité longitudinale (8A),
**caractérisé en ce que** chacun desdits éléments acoustiques (8) est fixé avec un contact périphérique dans l'un desdits logements (7) transversaux pratiqués dans ladite plaque (2) avec son ouverture (9) en regard de ladite peau résistive (4).

2. Panneau acoustique selon la revendication 1,
**caractérisé en ce qu'**au moins certains desdits éléments acoustiques (8) présentent une forme conique.

3. Panneau acoustique selon la revendication 1,
**caractérisé en ce qu'**au moins certains desdits éléments acoustiques (8) présentent une forme cylindrique.

4. Panneau acoustique selon l'une quelconque des revendications précédentes,
**caractérisé en ce que** les éléments acoustiques (8) sont collés, soudés ou brasés dans les logements (7) de la plaque (2).

5. Panneau acoustique selon l'une quelconque des revendications 1 à 4,
**caractérisé en ce qu'**au moins certains desdits éléments acoustiques (8) sont pourvus d'un fond (10) fermé, à une extrémité longitudinale (8B) opposée à celle (8A) pourvue de l'ouverture (9).

6. Panneau acoustique selon l'une quelconque des revendications 1 à 4,
**caractérisé en ce qu'**au moins certains desdits éléments acoustiques (8) sont pourvus d'une ouverture (11) dite auxiliaire, à une extrémité longitudinale (8B) opposée à celle (8A) pourvue de ladite ouverture (9), ladite ouverture auxiliaire (11) étant située à distance de ladite peau arrière (6).

7. Panneau acoustique selon l'une quelconque des revendications précédentes,
**caractérisé en ce qu'**au moins certains desdits éléments acoustiques (8) sont agencés dans la plaque (2) selon l'une des dispositions suivantes : aléatoire, en carré, en quinconce.

8. Panneau acoustique selon l'une quelconque des revendications précédentes,
**caractérisé en ce qu'**au moins certains desdits éléments acoustiques (8) sont pourvus d'une collerette (13) entourant ladite ouverture (9), chacune desdites collerettes (13) étant fixée à la peau résistive (4) et/ou à la plaque (2).

9. Panneau acoustique selon l'une quelconque des revendications 1 à 8,
**caractérisé en ce qu'**il comporte des éléments acoustiques (8) d'un seul type.

10. Panneau acoustique selon l'une quelconque des revendications 1 à 8,
**caractérisé en ce qu'**il comporte des éléments acoustiques (8) de plusieurs types différents.

11. Panneau acoustique selon la revendication 10,
**caractérisé en ce que** chaque type d'élément acoustique (8) est configuré pour permettre une absorption acoustique privilégiée dans au moins une gamme de fréquences acoustiques donnée.

12. Panneau acoustique selon l'une des revendications 10 et 11,
**caractérisé en ce que** les éléments acoustiques (8) d'un même type, parmi lesdits types différents, sont regroupés dans au moins une zone donnée de la plaque (2).

13. Panneau acoustique selon l'une quelconque des revendications précédentes,
**caractérisé en ce qu'**au moins la peau résistive (4) est incurvée, et **en ce que** les éléments acoustiques (8) sont agencés de sorte que leur direction longitudinale soit sensiblement radiale, localement, à ladite peau résistive (4) incurvée.

14. Panneau acoustique selon l'une quelconque des revendications précédentes,
**caractérisé en ce que**, pour au moins certains desdits éléments acoustiques (8), l'élément acoustique (8) possède une géométrie spécifique afin de s'intégrer dans le logement (7) dans lequel il est agencé de manière à créer un espace libre (16B), ledit l'espace libre (16B) étant rempli par un matériau dit de remplissage.

15. Panneau acoustique selon l'une quelconque des revendications précédentes,
**caractérisé en ce qu'**au moins certains desdits éléments acoustiques (8) présentent une structure double à deux pièces similaires (14, 15), dont l'une est intégrée dans l'autre.

16. Panneau acoustique selon l'une quelconque des revendications précédentes,
**caractérisé en ce que** la peau résistive (4) présente une perméabilité sonore, au moins pour des sons devant être atténués par le panneau acoustique (1), plus importante que la peau arrière (6).

17. Panneau acoustique selon l'une quelconque des revendications précédentes,
**caractérisé en ce que** le matériau (3) absorbant acoustique de la plaque (2) est réalisé selon l'une des manières suivantes : avec une structure alvéolaire, en mousse, en matière fibreuse ou en matériau fritté.

18. Procédé de fabrication d'un panneau acoustique selon l'une quelconque des revendications 1 à 17,
**caractérisé en ce qu'**il comporte une pluralité d'étapes (E1 à E4) successives consistant au moins, respectivement :
- à former la plaque (2) en matériau (3) absorbant acoustique ;
- à pratiquer les logements (7) transversaux dans le matériau (3) absorbant acoustique de ladite plaque (2) ;
- à placer et fixer les éléments acoustiques (8) dans lesdits logements (7) ; et
- à agencer et fixer la peau résistive (4) perforée et la peau arrière (6) de part et d'autre de la plaque (2).

## Patentansprüche

1. Schall-Platte für Luftfahrzeug, wobei die Schall-Platte (1) eine Platte (2) umfasst, die aus einem schallabsorbierenden Material (3) gefertigt ist, sowie eine als resistiv bezeichnete Schale (4) und eine als hintere bezeichnete Schale (6), die jeweils beiderseits dieser Platte (2) eingerichtet sind, wobei die Platte (2) mit einer Vielzahl von querverlaufenden Aufnahmen (7) versehen ist, die im schallabsorbierenden Material (3) der Platte (2) angebracht sind, und wobei die Schall-Platte (1) eine Vielzahl von Schallelementen (8) mit länglicher Form umfasst, die geeignet sind, eine Schallabsorption auszuführen, wobei jedes der Schallelemente (8) eine Öffnung (9) an zumindest einem Längsende (8A) aufweist, **dadurch gekennzeichnet, dass** jedes der Schallelemente (8) mit einem Umfangskontakt in einer der querverlaufenden Aufnahmen (7) befestigt ist, die in der Platte (2) angebracht sind, mit dessen Öffnung (9) der resistiven Schale (4) gegenüberliegend.

2. Schall-Platte nach Anspruch 1,
**dadurch gekennzeichnet, dass** zumindest gewisse der Schallelemente (8) eine konische Form aufweisen.

3. Schall-Platte nach Anspruch 1,
**dadurch gekennzeichnet, dass** zumindest gewisse der Schallelemente (8) eine zylindrische Form aufweisen.

4. Schall-Platte nach einem der vorstehenden Ansprüche,
**dadurch gekennzeichnet, dass** die Schallelemente (8) in den Aufnahmen (7) der Platte (2) geklebt, geschweißt oder gelötet sind.

5. Schall-Platte nach einem der Ansprüche 1 bis 4,
**dadurch gekennzeichnet, dass** zumindest gewisse der Schallelemente (8) an einem Längsende (8B) entgegengesetzt zu jenem (8A), das mit einer Öffnung (9) versehen ist, mit einem geschlossenen Boden (10) versehen sind.

6. Schall-Platte nach einem der Ansprüche 1 bis 4,
**dadurch gekennzeichnet, dass** zumindest gewisse der Schallelemente (8) an einem Längsende (8B) entgegengesetzt zu jenem (8A), das mit einer Öffnung (9) versehen ist, mit einer als Hilfsöffnung bezeichneten Öffnung (11) versehen sind, wobei die Hilfsöffnung (11) von der hinteren Schale (6) beabstandet gelegen ist.

7. Schall-Platte nach einem der vorstehenden Ansprüche,
**dadurch gekennzeichnet, dass** zumindest gewisse der Schallelemente (8) in der Platte (2) gemäß einer der folgenden Anordnungen eingerichtet sind: willkürlich, quadratisch, versetzt.

8. Schall-Platte nach einem der vorstehenden Ansprüche,
**dadurch gekennzeichnet, dass** zumindest gewisse der Schallelemente (8) mit einem Kragen (13) versehen sind, der die Öffnung (9) umgibt, wobei jeder der Kragen (13) an der resistiven Schale (4) und/oder an der Platte (2) befestigt ist.

9. Schall-Platte nach einem der Ansprüche 1 bis 8,
**dadurch gekennzeichnet, dass** sie Schallelemente (8) eines einzigen Typs umfasst.

10. Schall-Platte nach einem der Ansprüche 1 bis 8,
**dadurch gekennzeichnet, dass** sie Schallelemente (8) mehrerer unterschiedlicher Typen umfasst.

11. Schall-Platte nach Anspruch 10,
**dadurch gekennzeichnet, dass** jeder Typ von Schallelement (8) konfiguriert ist, um eine bevorzugte Schallabsorption in mindestens einem gegebenen Schallfrequenzbereich zu ermöglichen.

12. Schall-Platte nach einem der Ansprüche 10 und 11,
**dadurch gekennzeichnet, dass** die Schallelemente (8) eines selben Typs, unter den unterschiedlichen Typen, in zumindest einer gegebenen Zone der Platte (2) gruppiert sind.

13. Schall-Platte nach einem der vorstehenden Ansprüche,
**dadurch gekennzeichnet, dass** zumindest die resistive Schale (4) gekrümmt ist und dadurch, dass die Schallelemente (8) so eingerichtet sind, dass ihre Längsrichtung im Wesentlichen lokal radial zur gekrümmten resistiven Schale (4) ist.

14. Schall-Platte nach einem der vorstehenden Ansprüche,
**dadurch gekennzeichnet, dass** für zumindest gewisse der Schallelemente (8) das Schallelement (8) eine spezifische Geometrie besitzt, um sich in die Aufnahme (7) einzufügen, in der es eingerichtet ist, sodass ein freier Raum (16B) geschaffen wird, wobei der freie Raum (16B) mit einem als Füllmaterial bezeichneten Material gefüllt ist.

15. Schall-Platte nach einem der vorstehenden Ansprüche,
**dadurch gekennzeichnet, dass** zumindest gewisse der Schallelemente (8) eine Doppelstruktur mit zwei ähnlichen Teilen (14, 15) aufweisen, von denen eines im anderen eingefügt ist.

16. Schall-Platte nach einem der vorstehenden Ansprüche,
**dadurch gekennzeichnet, dass** die resistive Schale (4) zumindest für Töne, die von der Schall-Platte (1) gedämmt werden sollen, eine stärkere Klangdurchlässigkeit aufweist als die hintere Schale (6).

17. Schall-Platte nach einem der vorstehenden Ansprüche,
**dadurch gekennzeichnet, dass** das schallabsorbierende Material (3) der Platte (2) gemäß einer der folgenden Weisen gefertigt ist: mit einer Wabenstruktur, aus Schaumstoff, aus faseriger Materie oder aus gesintertem Material.

18. Verfahren zur Herstellung einer Schall-Platte nach einem der Ansprüche 1 bis 17,
**dadurch gekennzeichnet, dass** es eine Vielzahl von aufeinanderfolgenden Schritten (E1 bis E4) umfasst, die jeweils zumindest aus Folgendem bestehen:
- Bilden einer Platte (2) aus schallabsorbierendem Material (3);
- Anbringen von querverlaufenden Aufnahmen (7) im schallabsorbierenden Material (3) der Platte (2);
- Platzieren und Befestigen der Schallelemente (8) in den Aufnahmen (7); und
- Einrichten und Befestigen der perforierten resistiven Schale (4) und der hinteren Schale (6) beiderseits der Platte (2).

## Claims

1. An acoustic panel for aircraft, said acoustic panel (1) comprising a plate (2) made of a sound-absorbing material (3) and a so-called resistive skin (4) and a so-called backing skin (6) that are arranged, respectively, on either side of this plate (2), said plate (2) being provided with a plurality of transverse recesses (7) formed in the sound-absorbing material (3) of said plate (2), and said acoustic panel (1) comprising a plurality of acoustic elements (8) of elongate form, suitable for producing an acoustic absorption, each of said acoustic elements (8) having an opening (9) at least one longitudinal end (8A),
**characterized in that** each of said acoustic elements (8) is fixed with a peripheral contact in one of said transverse recesses (7) formed in said plate (2) with its opening (9) facing said resistive skin (4).

2. The acoustic panel as claimed in claim 1,
**characterized in that** at least some of said acoustic elements (8) have a conical form.

3. The acoustic panel as claimed in claim 1,
**characterized in that** at least some of said acoustic elements (8) have a cylindrical form.

4. The acoustic panel as claimed in any one of the preceding claims, **characterized in that** the acoustic elements (8) are glued, welded or brazed in the recesses (7) of the plate (2).

5. The acoustic panel as claimed in any one of claims 1 to 4,
**characterized in that** at least some of said acoustic elements (8) are provided with a closed bottom (10), at a longitudinal end (8B) opposite to that (8A) provided with the opening (9).

6. The acoustic panel as claimed in any one of claims 1 to 4,
**characterized in that** at least some of said acoustic elements (8) are provided with a so-called auxiliary opening (11), at a longitudinal end (8B) opposite to that (8A) provided with said opening (9), said auxiliary opening (11) being situated at a distance from said backing skin (6).

7. The acoustic panel as claimed in any one of the preceding claims,
**characterized in that** at least some of said acoustic elements (8) are arranged in the plate (2) according to one of the following arrangements: random, in squares, staggered.

8. The acoustic panel as claimed in any one of the preceding claims,
**characterized in that** at least some of said acoustic elements (8) are provided with a flange (13) surrounding said opening (9), each of said flanges (13) being fixed to the resistive skin (4) and/or to the plate (2).

9. The acoustic panel as claimed in any one of claims 1 to 8,
**characterized in that** it comprises acoustic elements (8) of a single type.

10. The acoustic panel as claimed in any one of claims 1 to 8,
**characterized in that** it comprises acoustic elements (8) of several different types.

11. The acoustic panel as claimed in claim 10,
**characterized in that** each type of acoustic element (8) is configured to allow an acoustic absorption that is prioritized in at least one given range of acoustic frequencies.

12. The acoustic panel as claimed in one of claims 10 and 11,
**characterized in that** the acoustic elements (8) of one and the same type, out of said different types, are grouped together in at least one given zone of the plate (2).

13. The acoustic panel as claimed in any one of the preceding claims,
**characterized in that** at least the resistive skin (4) is curved, and the acoustic elements (8) are arranged such that their longitudinal direction is substantially radial, locally, to said curved resistive skin (4).

14. The acoustic panel as claimed in any one of the preceding claims,
**characterized in that**, for at least some of said acoustic elements (8), the acoustic element (8) has a specific geometry in order to be incorporated in the recess (7) in which it is arranged so as to create a free space (16B), said free space (16B) being filled by a so-called filling material.

15. The acoustic panel as claimed in any one of the preceding claims,
**characterized in that** at least some of said acoustic elements (8) have a dual structure with two similar pieces (14, 15), one of which is incorporated in the other.

16. The acoustic panel as claimed in any one of the preceding claims,
**characterized in that** the resistive skin (4) has a sound permeability, at least for sounds that have to be attenuated by the acoustic panel (1), that is greater than the backing skin (6).

17. The acoustic panel as claimed in any one of the preceding claims,
**characterized in that** the sound-absorbing material (3) of the plate (2) is produced in one of the following ways: with a cellular structure, in foam, in fibrous material or in sintered material.

18. A method for producing an acoustic panel as claimed in any one of claims 1 to 17,
**characterized in that** it comprises a plurality of successive steps (E1 to E4) consisting at least, respectively:
- in forming the plate (2) made of sound-absorbing material (3);
- in forming the transverse recesses (7) in the sound-absorbing material (3) of said plate (2);
- in placing and fixing the acoustic elements (8) in said recesses (7) and
- in arranging and fixing the perforated resistive skin (4) and the backing skin (6) on either side of the plate (2).
